Europäisches Patentamt

European Patent Office

Office européen des brevets

(11) Publication number: **0 063 439**
**B1**

(12) **EUROPEAN PATENT SPECIFICATION**

(45) Date of publication of patent specification: **06.08.86**

(21) Application number: **82301763.7**

(22) Date of filing: **02.04.82**

(51) Int. Cl.⁴: **G 11 B 7/24, B 41 M 5/24**

(54) Optically readable record carriers.

(30) Priority: **10.04.81 JP 54678/81**

(43) Date of publication of application:
**27.10.82 Bulletin 82/43**

(45) Publication of the grant of the patent:
**06.08.86 Bulletin 86/32**

(84) Designated Contracting States:
**AT DE FR GB IT NL**

(56) References cited:
**EP-A-0 010 017**
**EP-A-0 023 674**
**EP-A-0 049 813**
**DE-B-2 304 723**
**GB-A-2 009 996**
**NL-A-7 900 205**
**US-A-3 787 275**
**US-A-4 066 268**

**Patent Abstracts of Japan, vol. 3, no. 159, 27
December 1979, page 86E162**

(73) Proprietor: **SONY CORPORATION**
**7-35 Kitashinagawa 6-Chome Shinagawa-ku
Tokyo 141 (JP)**

(72) Inventor: **Ohga, Norio**
**9-1-1112 Sanban-cho Chiyoda-ku
Tokyo (JP)**

(74) Representative: **Thomas, Christopher Hugo
et al
D Young & Co 10 Staple Inn
London WC1V 7RD (GB)**

Courier Press, Leamington Spa, England.

## Description

This invention relates to optically readable record carriers on which information is stored in an optically readable structure.

Such a record carrier, in the shape for example of a disc, can be read optically by focussing a reading beam of radiation such as visible or infrared light onto the optical structure, and moving the radiation spot thus formed and a spiral information track relative to each other. This results in the reading beam being modulated in accordance with the sequence of areas and intermediate areas in the spiral information track. The modulated reading beam is then converted by a radiation-sensitive detector into an electrical signal from which for example audio and/or video information can be derived.

Such a record carrier as shown, for example, in Patent Abstracts of Japan, Volume 3, Number 159, page 86 E 62, Kokai Number 54—139702, comprises a substrate having pits or bumps forming the spiral information track thereon, a metallic layer covering the surface of the substrate including the pits or bumps, and a transparent protective layer covering the metallic layer for protecting the metallic layer. In this case, a reading beam is projected from the protective layer onto the spiral information track, where it is reflected by the metallic layer. More particularly, the metallic layer forming the reflective layer is formed over the whole of that surface of the substrate on which information is stored. In practice, aluminium is used for the metallic layer which is formed or applied by a normal evaporation or sputtering process. According to GB—A—2009996, a protective material, such as a resin curable by ultra-violet light (hereinafter referred to as U.V. resin), is applied onto a metallic layer covering a substrate with embossed information thereon. The resin is cured by ultra-violet light, in order to protect the metallic layer from scratches, abrasion and wear.

However, since the metallic layer extends to the outer-most and inner-most portions of the substrate, that is the edge portions of the record carrier, the edge portions of the metallic layer are exposed to air, so that it becomes oxidized, with a consequent tendency to strip off from the substrate and/or the protective layer. Also, if such stripping-off occurs, air further invades the stripped-off region, so that the oxidation and the stripping-off progress further across the record carrier. Of course, if a clear matallic layer is not maintained on the information area, correct reproduction is not obtained by the reading beam. Moreover, aluminium does not have very good compatibility with the resin and this tends to increase the stripping-off.

The conventional record carrier generally has a paper label on which information such as music titles and details of artists and composers is printed. If such a paper label is attached to the protective layer by adhesive material, the label stresses the substrate, so that there is a tendency to warp the record carrier.

Patent specificaiton NL—A—7 900 205 discloses an optically readable record carrier comprising a metallic recording layer deposited on a transparent substrate with an information track formed in the recording layer. Separated from the information track by a closed chamber containing clean air is a protective shield which is sealed to an edge portion of the substrate not covered by the recording layer.

According to the present invention there is provided an optically readable record carrier comprising a disc-like substrate made of transparent material and having a central aperture, an information track formed on one surface of said substrate other than the outer edge portion of said surface, a metallic layer formed on said information track in intimate contact therewith for reflecting a reading beam, and a protective layer formed on said metallic layer in intimate contact therewith to protect said metallic layer; characterised in that:

said metallic layer is not formed on said outer edge portion of said substrate or on an inner edge portion of said substrate adjacent to said central aperture;

said protective layer covers said metallic layer and said outer and inner edge portions of said substrate, so that said metallic layer is not exposed to air and is protected from oxidation;

said protective layer is formed by a resin cured by ultra-violet light; and a label is formed on said protective layer by a printing technique.

The invention will now be described by way of example with reference to the accompanying drawing, in which:

Figure 1 is a sectional view of a replica disc which is to be used to form an embodiment of the invention;

Figure 2 is a sectional view of the replica disc with masks;

Figure 3 is a sectional view of the replica disc with a metallic layer; and

Figure 4 is a sectional view of a record carrier forming an embodiment of the invention.

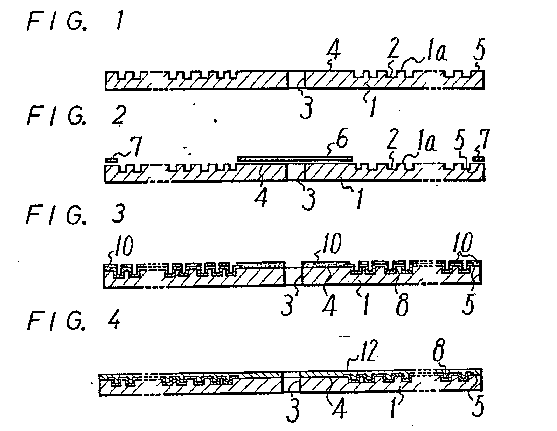

As shown in Figure 1, a disc-like substrate 1, or so-called replica disc is made of a transparent plastics resin, such as acrylic resin, and an information signal track 2, carrying audio and/or video information in digital form, or some other digital signal, is formed as pits on an upper surface 1a of the substrate 1. The information signal track 2 is a spiral having a large number of quasi-concentric turns. Each turn comprises a crenellated structure the dimensions of which are dependent on the recorded information. Thus, the spacings between the raised portions or merlons are different and so are their lengths. Both spacings and lengths are determined by the information stored in the information signal track 2. The heights of the merlons are equal to one another and in the case of a record carrier to be read by reflection are preferably equal to one quarter of the wavelength of the radiation by means of which the record carrier is to be read. Preferably the upper surface of the merlons is coplanar with the upper surface of the spaces.

Such a replica disc is obtained by the following steps. A metallic layer is coated on an information surface of a master plate by electrotyping in order to form a mother plate. Next a metallic layer is formed on an information surface formed on the mother plate by electrotyping to obtain a stamper. The stamper has a reinforcement layer and it is set in a metal die for moulding, the replica disc being obtained therefrom by an injection moulding technique or a compression moulding technique.

As shown in Figure 1, the substrate 1 has a central aperture 3 to be engaged by a spindle of a disc player, and inner and outer edge portions or surfaces 4 and 5 which are coplanar with each other, but do not have an information signal track formed thereon.

As shown in Figure 2, a circular mask 6 and an annular mask 7 are placed on the inner and outer edge portions or surfaces 4 and 5 respectively on which no information signal track is formed, and a metallic, for example an aluminium, layer 8 is formed as a reflective layer on the upper surface 1a of the substrate 1 by a sputtering or evaporation process. No aluminium is deposited on the inner and outer edge portions or surfaces 4 and 5 due to the masks 6 and 7, so the inner and outer edge portions or surfaces 4 and 5 are not provided with a metallic layer. The resulting metallic layer 8 is shown in Figure 3.

After removing the masks 6 and 7, a protective layer 12 in the form of a thin film of U.V. resin is applied so as to protect the metallic layer 8 and the inner and outer edge portions or surfaces 4 and 5, and is then cured by ultra-violet light. Therefore, the protective layer 12 is formed covering the whole upper surface of the substrate 1.

Information, such as music titles and details of artists and composers, relating to the recorded information signal, is printed on the protective layer 12 by silk screen printing. Thus, the protective layer 12 serves not only as a protection layer for the metallic layer 8 but also as a record label. On reading the record carrier, a reading beam is projected thereon from the under-side of the substrate 1.

As described above, the metallic layer is wholly covered by the protective layer, and even the edges are not exposed to air, so oxidation is avoided. This means that the metallic layer is protected for a long time, and the information signal recorded on the record carrier is preserved without deterioration.

## Claims

1. An optically readable record carrier comprising a disc-like substrate (1) made of transparent material and having a central aperture (3), an information track (2) formed on one surface of said substrate (1) other than the outer edge portion (5) of said surface, a metallic layer (8) formed on said information track (2) in intimate contact therewith for reflecting a reading beam, and a protective layer (12) formed on said metallic layer (8) in intimate contact therewith to protect said metallic layer (8); characterised in that:

said metallic layer (8) is not formed on said outer edge portion (5) of said substrate (1) or on an inner edge portion (4) of said substrate (1) adjacent to said central aperture (3);

said protective layer (12) covers said metallic layer (8) and said outer and inner edge portions (5, 4) of said substrate (1), so that said metallic layer (8) is not exposed to air and is protected from oxidation;

said protective layer (12) is formed by a resin cured by ultra-violet light; and

a label is formed on said protective layer (12) by a printing technique.

2. A record carrier according to claim 1 wherein said metallic layer (8) is formed of aluminium.

## Revendications

1. Support d'enregistrement pouvant être optiquement lu qui comprend un substrat en forme de disque (1) fait d'un matériau transparent et possédant une ouverture centrale (3), une piste d'information (2) formée sur une face dudit substrat (1) autre que la partie de bord supérieure (5) de ladite surface, une couche métallique (8) formée sur ladite piste d'information (2) en contact intime avec elle afin de réfléchir un faisceau de lecture, et une couche protectrice (12) formée sur ladite couche métallique (8) en contact intime avec celle-ci pour protéger ladite couche métallique (8); caractérisé en ce que:

ladite couche métallique (8) n'est pas formée sur ladite partie de bord extérieure (5) dudit substrat (1) ou sur une partie de bord intérieure (4) dudit substrat (1) adjacente à ladite ouverture centrale (3);

ladite couche protectrice (12) couvre ladite couche métallique (8) et lesdites parties de bords extérieure et intérieure (4, 5) dudit substrat (1) si bien que ladite couche métallique (8) n'est pas exposée à l'air et est protégée de l'oxydation;

ladite couche protectrice (12) est formée par une résine durcie au moyen d'une lumière ultraviolette; et

une étiquette est formée sur ladite couche protectrice (12) par une technique d'impression.

2. Support d'enregistrement selon la revendication 1, où ladite couche métallique (8) est formée d'aluminium.

## Patentansprüche

1. Optisch lesbarer Aufzeichnungsträger, bestehend aus einem scheibenartigen Substrat (1), das aus einem transparenten Material hergestellt ist und eine zentrale Öffnung (3), eine Informationsspur (2), die auf einer Oberfläche des Substrats (1) außer in dem äußeren Randabschnitt (5) der Oberfläche gebildet ist, eine metallische Schicht (8), die auf der Informationsspur (2) in enger Berührung mit dieser zum Reflektieren eines Lesestrahls gebildet ist, und eine schützende Schicht (12) hat, die auf der metallischen Schicht (8) in enger Berührung mit dieser gebildet ist, um die metallische Schicht (8) zu schützen, dadurch gekennzeichnet,

daß die metallische Schicht (8) nicht auf dem äußeren Randabschnitt (5) des Substrats (1) oder auf einem inneren Randabschnitt (4) des Substrats (1), der an die zentrale Öffnung (3) angrenzt, gebildet ist, daß die schützende Schicht (12) die metallische Schicht (8) sowie den äußeren und den inneren Randabschnitt (5, 4) des Substrats (1) bedeckt, so daß die metallische Schicht (8) nicht der Luft ausgesetzt ist und vor Oxidation geschützt ist,

daß die schützende schicht (12) durch Harz gebildet ist, das durch ultraviolettes Licht ausgehärtet wird, und

daß auf der schützenden Schicht (12) eine Aufschrift durch eine Drucktechnik gebildet ist.

2. Aufzeichnungsträger nach Anspruch 1, bei dem die metallische Schicht (8) aus Aluminium gebildet ist.

F I G. 1

F I G. 2

F I G. 3

F I G. 4